# EUROPEAN PATENT APPLICATION

(11) **EP 4 020 660 A1**
(43) Date of publication of application: **29.06.2022**
(21) Application number: 21216192.1
(22) Date of filing: 21.12.2021
(51) Int. Cl.: H01M 10/42, H01M 10/613, H01M 10/615, H01M 10/63, H01M 10/6563, H01M 10/667, H01M 50/204, B60L 58/26, B60L 58/27

(54) **ENERGY STORAGE SYSTEM AND TEMPERATURE CONTROL METHOD THEREOF**

(30) Priority: 22.12.2020 CN 202011532064
(71) Applicant: Huawei Digital Power Technologies Co., Ltd., Shenzhen, Guangdong 518043 (CN)
(72) Inventor: LI, Ping, Shenzhen, 518129 (CN); WANG, Hui, Shenzhen, 518129 (CN)
(74) Representative: Isarpatent

(57) **Abstract**

This application provides an energy storage system and a temperature control method thereof. The energy storage system includes a main control module, a battery module, and a temperature control apparatus. The battery module includes a battery monitoring unit and a battery pack, the battery monitoring unit includes a battery management system and a DC/DC power converter, and the main control module is configured to control the temperature control apparatus to choose to transport a heat conduction medium to the battery module along at least one of a first path and a second path. The heat conduction medium along the first path reaches the battery pack after passing through the battery monitoring unit, and the heat conduction medium along the second path reaches the battery monitoring unit after passing through the battery pack. Because the temperature control apparatus can flexibly select a thermal path with relatively low energy consumption based on an actual application situation, to transport the heat conduction medium to the battery module, an energy loss of the energy storage system is reduced.

## Description

### TECHNICAL FIELD

This application relates to the field of temperature control technologies, and in particular, to an energy storage system and a temperature control method thereof.

### BACKGROUND

A proportion of new energy power generating modes such as wind energy generation and photovoltaic power generation is rapidly increasing, and therefore a large amount of energy needs to be stored as a supplement to the new energy power generation. Lithium battery energy storage is increasingly applied. Energy continuously develops towards high density and a large capacity. Lower energy consumption and smaller PUE (power usage effectiveness) are inevitable trends. Energy consumption of a temperature control system is most prominent. For example, for a function system, more than 70% of a loss comes from a refrigerating system. A main reason is that a lithium battery is sensitive to a temperature (an optimal operating temperature range is usually from 0 to 40 degrees). Therefore, a development trend is towards a low-loss energy storage temperature control technology.

### SUMMARY

Embodiments of this application provide an energy storage system that can reduce energy consumption and a temperature control method thereof.

According to a first aspect, this application provides an energy storage system, including a main control module, a battery module, and a temperature control apparatus. The battery module includes a battery monitoring unit and a battery pack, the battery monitoring unit includes a battery management system and a DC/DC power converter, and the main control module is configured to control the temperature control apparatus to choose to transport a heat conduction medium to the battery module along at least one of a first path and a second path. The heat conduction medium along the first path reaches the battery pack after passing through the battery monitoring unit, and the heat conduction medium along the second path reaches the battery monitoring unit after passing through the battery pack.

The main control module is able to flexibly control the temperature control apparatus to choose to transport the heat conduction medium to the battery module along at least one of the first path and the second path, that is, a thermal path is able to be adjusted. For example, a thermal path with relatively low energy consumption may be selected based on an actual application situation, to transport the heat conduction medium to the battery module, so that a temperature of the battery pack is kept within a preset target temperature range. Usually, the target temperature range is an optimal operating temperature range of the battery pack. Therefore, an energy loss of the energy storage system is reduced, and operating efficiency of the energy storage system is improved. In addition, the DC/DC power converter has relatively high heat power consumption during operating, and when the heat conduction medium is transported along the first path, the heat conduction medium is able to first reach the battery monitoring unit, so that heat generated by the DC/DC power converter during operating is able to be reused, thereby reducing an energy loss of the energy storage system for temperature control of the battery pack.

In a conventional energy storage system, only a single path is disposed for entry to a battery module, that is, a temperature of a battery pack is controlled in a single direction. In this application, the heat conduction medium is able to be transported along the first path and the second path, that is, the temperature is controlled in two directions. At same electrical power, compared with the conventional energy storage system, in the bi-directional temperature control provided in this application, cold energy and heat are both maximum, so that energy consumption is reduced at a maximum extent.

According to the first aspect, in a first possible implementation of the first aspect of this application, the temperature control apparatus includes a heating mode and a heat dissipation mode; and when the temperature control apparatus is in the heating mode, the main control module is configured to control the temperature control apparatus to transport the heat conduction medium to the battery module along the first path; or when the temperature control apparatus is in the heat dissipation mode, the main control module is configured to control the temperature control apparatus to transport the heat conduction medium along the second path.

It can be learned that, in the heating mode, the heat conduction medium passes through the battery monitoring unit and absorbs heat of the DC/DC power converter in the battery monitoring unit, to heat the battery pack, so that the battery temperature is controlled at minimum electric power, thereby reducing energy consumption of the energy storage system and improving heating efficiency of the energy storage system. In the heat dissipation mode, the heat conduction medium first reaches the battery pack to cool the battery pack. This improves heat dissipation efficiency.

In the conventional energy storage system, usually, a heat conduction medium is transported to the battery module by using a unidirectional thermal path, that is, the heat conduction medium has the same thermal path during both heating and heat dissipation of the battery pack. As a result, for example, power consumption heat generated by a DC/DC power converter is wasted during heating, and power consumption heat generated by the DC/DC power converter with relatively high power consumption consumes specific cold energy during heat dissipation of the battery pack.

In this application, one battery module is used as an example. In the heating mode, that is, the first path is conducted and the second path is closed, Q1 + ΔQ = Q heat. Q1 is heat externally output to the battery module by using the heat conduction medium, ΔQ is power consumption heat of the DC/DC power converter, and Q heat is total heat input to the battery pack. In the heat dissipation mode, that is, the first path is closed and the second path is open, Q2 - ΔQ = Q cold. Q2 is cold energy externally output to the battery module by using the heat conduction medium, ΔQ is power consumption heat of the DC/DC power converter, and Q cold is cold energy input to the battery pack.

Clearly, in the energy storage system provided in this application, because the bidirectional adjustable first path and second path are disposed, in the heating mode, Q heat is the heat Q1 externally output to the battery module by using the heat conduction medium plus the power consumption heat ΔQ of the DC/DC power converter, and therefore the battery pack obtains maximum total heat; or in the heat dissipation mode, the heat conduction medium is directly transported to the battery pack without passing through the battery monitoring unit, and therefore a cold energy loss is reduced, that is, cold energy that is able to be obtained by the battery pack is Q cold (max).

According to the first aspect or the first possible implementation of the first aspect, in a second possible implementation of the first aspect of this application, the battery management system is further configured to monitor the battery temperature of the battery pack and feed back the battery temperature to the main control module; the main control module is configured to: when the battery temperature is less than a first threshold of the preset target temperature range, control the temperature control apparatus to enter the heating mode; and the main control module is further configured to: when the battery temperature is greater than a second threshold of the preset target temperature range, control the temperature control apparatus to enter the heat dissipation mode. Based on the monitored battery temperature, a mode of the temperature control apparatus is automatically adjusted and a thermal path is selected. This makes the energy storage system more intelligent.

According to the first aspect or the first and the second possible implementations of the first aspect, in a third possible implementation of the first aspect of this application, the heat conduction medium includes a first heat conduction medium and a second heat conduction medium; and when the temperature control apparatus is in the heating mode, the temperature control apparatus transports the first heat conduction medium to the battery module; or when the temperature control apparatus is in the heat dissipation mode, the temperature control apparatus transports the second heat conduction medium to the battery module, where a temperature of the first heat conduction medium is higher than a temperature of the second heat conduction medium. In the heating mode and the heat dissipation mode, heat conduction media with different temperatures are provided, to improve thermal efficiency of the energy storage system.

According to the first aspect or the first to the third possible implementations of the first aspect, in a fourth possible implementation of this application, a channel, a first channel port, and a second channel port are disposed in the battery module, and the channel is configured to accommodate the heat conduction medium; both a status of the first channel port and a status of the second channel port include a conducted state and a closed state; the heat conduction medium is able to move in the channel along the first path when the first channel port is conducted; the heat conduction medium is able to move in the channel along the second path when the second channel port is conducted; and the main control module is further configured to control the temperature control apparatus to switch the status of the first channel port and the status of the second channel port. A transport path of the heat conduction medium is selected by switching the status of the first channel port and the status of the second channel port, thereby facilitating control.

According to the first aspect or the first to the fourth possible implementations of the first aspect, in a fifth possible implementation of this application, the temperature control apparatus includes a connection cavity and a switching unit, the connection cavity is connected to the first channel port and the second channel port, and the switching unit is communicatively connected to the main control module, and is configured to switch the status of the first channel port and the status of the second channel port. The connection cavity may be used as an area in which the heat conduction medium stays before reaching the first path or the second path. Without changing an internal structure or a spatial setting of the battery module, the first channel port is conducted or closed by using the switching unit, and the second channel port is conducted or closed by using the switching unit, thereby implementing bidirectional temperature adjustment and reducing manufacturing costs of the energy storage system.

According to the first aspect or the first to the fifth possible implementations of the first aspect, in a sixth possible implementation of the first aspect of this application, the switching unit includes a drive member and a movable member driven by the drive member, the drive member is communicatively connected to the main control module, the movable member is accommodated in the connection cavity, and the movable member is driven by the drive member to move in the connection cavity; and the first channel port is closed when the movable member blocks the first channel port, the first channel port is conducted when the movable member does not block the first channel port, the second channel port is closed when the movable member blocks the second channel port, and the second channel port is conducted when the movable member does not block the second channel port. The first path or the second path is conducted by controlling the drive member to drive the movable member to move, thereby facilitating control. The drive member may be a motor or the like.

According to the first aspect or the first to the sixth possible implementations of the first aspect, in a seventh possible implementation of the first aspect of this application, the drive member includes a first drive member and a second drive member, and the movable member includes a first movable member and a second movable member; the first movable member is movably disposed in the connection cavity and is connected to the first drive member, and is configured to be driven by the first drive member to conduct or close the first channel port; and the second movable member is movably disposed in the connection cavity and is connected to the second drive member, and is configured to be driven by the second drive member to conduct or close the second channel port. A separate movable member and drive member are disposed on each path or channel port, thereby enhancing control flexibility.

According to the first aspect or the first to the seventh possible implementations of the first aspect, in an eighth possible implementation of the first aspect of this application, the temperature control apparatus further includes a temperature control unit, configured to provide a heat conduction medium, the temperature control unit is a fan, and the heat conduction medium is air.

According to the first aspect or the first to the eighth possible implementations of the first aspect, in a ninth possible implementation of the first aspect of this application, a first through hole and a second through hole are disposed on the movable member at an interval; and when the first through hole corresponds to a position of the first channel port, the first channel port is connected, and the movable member closes the second channel port; or when the second through hole corresponds to a position of the second channel port, the second channel port is connected, and the movable member closes the first channel port.

According to a second aspect, this application further provides a temperature control method of the energy storage system provided in the first aspect or the first to the ninth implementations of the first aspect, including: controlling a temperature control apparatus to choose to transport a heat conduction medium to a battery module along at least one of a first path and a second path, where the heat conduction medium along the first path reaches a battery pack after passing through a battery monitoring unit, the heat conduction medium along the second path reaches the battery monitoring unit after passing through the battery pack, and the battery monitoring unit includes a battery management system and a DC/DC power converter.

According to the second aspect, in a first possible implementation of the second aspect of this application, before the controlling a temperature control apparatus to choose to transport a heat conduction medium to a battery module along at least one of a first path and a second path, the temperature control method further includes a step that the battery monitoring unit monitors a battery temperature of the battery pack; controlling the temperature control apparatus to enter a heating mode includes: when the battery temperature is less than a first threshold of a preset target temperature range, controlling the temperature control apparatus to enter the heating mode; and controlling the temperature control apparatus to enter a heat dissipation mode includes: when the battery temperature is greater than a second threshold of the preset target temperature range, controlling the temperature control apparatus to enter the heat dissipation mode.

According to the second aspect or the first possible implementation of the second aspect of this application, in a second possible implementation of the second aspect of this application, when the temperature control apparatus is in the heating mode, the temperature control apparatus transports a first heat conduction medium to the battery module; or when the temperature control apparatus is in the heat dissipation mode, the temperature control apparatus transports a second heat conduction medium to the battery module, where a temperature of the first heat conduction medium is higher than a temperature of the second heat conduction medium.

According to the second aspect or the first and the second possible implementations of the second aspect, in a third possible implementation of the second aspect of this application, a channel, a first channel port, and a second channel port are disposed in the battery module, and the channel is configured to accommodate the heat conduction medium; both a status of the first channel port and a status of the second channel port include a conducted state and a closed state; the heat conduction medium is able to move in the channel along the first path when the first channel port is conducted; the heat conduction medium is able to move in the channel along the second path when the second channel port is conducted; and the controlling a temperature control apparatus to choose to transport a heat conduction medium to a battery module along at least one of a first path and a second path includes: controlling the temperature control apparatus to switch the statuses of the first channel port and the second channel port.

According to the second aspect or the first to the third possible implementations of the second aspect of this application, in a fourth possible implementation of the second aspect of this application, the temperature control apparatus includes a connection cavity and a switching unit, and the connection cavity is connected to the first channel port and the second channel port; and the controlling the temperature control apparatus to switch the statuses of the first channel port and the second channel port includes: controlling the switching unit to switch the statuses of the first channel port and the second channel port, so that the heat conduction medium in the connection cavity enters the channel through the first channel port and/or the second channel port.

According to the second aspect or the first to the fourth possible implementations of the second aspect of this application, in a fifth possible implementation of the second aspect of this application, the switching unit includes a drive member and a movable member driven by the drive member, and the movable member is accommodated in the connection cavity; and the controlling the switching unit to switch the statuses of the first channel port and the second channel port includes: controlling the drive member to drive the movable member to move in the connection cavity, where the first channel port is closed when the movable member blocks the first channel port, the first channel port is conducted when the movable member does not block the first channel port, the second channel port is closed when the movable member blocks the second channel port, and the second channel port is conducted when the movable member does not block the second channel port.

According to the second aspect or the first to the fifth possible implementations of the second aspect of this application, in a sixth possible implementation of the second aspect of this application, the drive member includes a first drive member and a second drive member, the movable member includes a first movable member and a second movable member, the first movable member is movably disposed in the connection cavity and is connected to the first drive member, and the second movable member is movably disposed in the connection cavity and is connected to the second drive member; and the controlling the drive member to drive the movable member to move in the connection cavity includes: when controlling the first drive member to drive the first movable member to conduct the first channel port, controlling the second drive member to drive the second movable member to close the second channel port; or when controlling the first drive member to drive the first movable member to close the first channel port, controlling the second drive member to drive the second movable member to conduct the second channel port.

### BRIEF DESCRIPTION OF DRAWINGS

FIG. 1 is a block diagram of a structure of a function system according to an implementation of this application;
FIG. 2 is a schematic diagram of flow directions of a heat flow and a cold flow of an energy storage system in a heating mode according to an implementation of this application;
FIG. 3 is a schematic diagram of flow directions of a heat flow and a cold flow of an energy storage system in a heating mode according to an implementation of this application;
FIG. 4 is a schematic diagram of a connection between a temperature control apparatus and a single battery module of an energy storage system according to an implementation of this application;
FIG. 5 is a schematic diagram of a partial structure of an energy storage system in a heating mode according to an implementation of this application;
FIG. 6 is a schematic diagram of a partial structure of an energy storage system in a heat dissipation mode according to an implementation of this application;
FIG. 7 is a schematic diagram of a partial structure of an energy storage system in a heating mode according to another implementation of this application; and
FIG. 8 is a flowchart of a temperature control method performed by an energy storage system according to an implementation of this application.

### DESCRIPTION OF EMBODIMENTS

To make objectives, technical solutions, and advantages of this application more clearly, the following further describes this application in detail with reference to the accompanying drawings.

It should be understood that the expressions such as "include" and "may include" that can be used in this application represent existence of disclosed functions, operations, or constituent elements, and are not limited to one or more additional functions, operations, and constituent elements. In this application, the terms such as "include" and/or "have" can be construed as representing a particular feature, quantity, operation, constituent element, component, or a combination thereof, but cannot be construed as excluding existence or addition possibility of one or more other features, quantities, operations, constituent elements, components, or combinations thereof.

In addition, in this application, the expression "and/or" includes any and all combinations of associated listed words. For example, the expression "A and/or B" may include A, may include B, or may include both A and B.

In this application, the expressions including ordinal numbers such as "first" and "second" can modify elements. However, the elements are not limited by the expressions. For example, the expressions do not limit an order and/or importance of the elements. The expressions are only used to distinguish an element from another element. For example, first user equipment and second user equipment indicate different user equipment, although both the first user equipment and the second user equipment are user equipment. Similarly, without departing from the scope of this application, a first element may be referred to as a second element, and similarly, a second element may be referred to as a first element.

When a component is referred to as "being connected to" or "accessing" another component, it should be understood that the component may be directly connected to or access the another component, or there may be another component between the component and the another component. In addition, when a component is referred to as "being directly connected to" or "directly accessing" another component, it should be understood that there is no component between the component and the another component.

When the battery pack is in an optimal operating temperature range, operating efficiency of the battery pack can be effectively improved and a service life of the battery pack can be prolonged. However, to control a temperature to be within the optimal operating temperature range of the battery pack, an energy loss is relatively high.

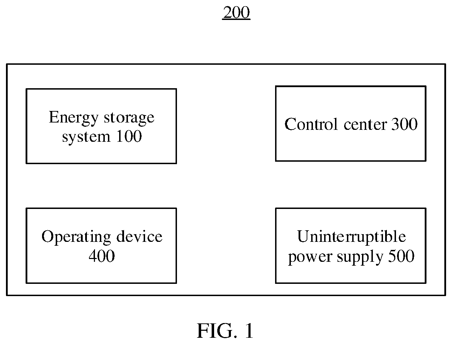

Based on this, refer to FIG. 1. This application provides a function system 200, including an energy storage system 100, a control center 300, an operating device 400, and an uninterruptible power supply 500. Normally, the uninterruptible power supply 500 is configured to supply power to the control center 300 and the operating device 400. As a supplementary energy source of the function system 200, the energy storage system 100 supplies power to the operating device 400 and the control center 300 in the event of a failure of the uninterruptible power supply 500 of the function system 200 or another situation. The operating device 400 includes a communications device, a lighting device, a data processing device, and the like. This is not limited herein. The uninterruptible power supply (uninterruptible power supply, UPS) 500 is configured to distribute power to the energy storage system 100.

It may be understood that in this application, the function system 200 is not limited to a data center, and the energy storage system 100 may be alternatively applied to another field, for example, the function system 200 may be an electric vehicle.

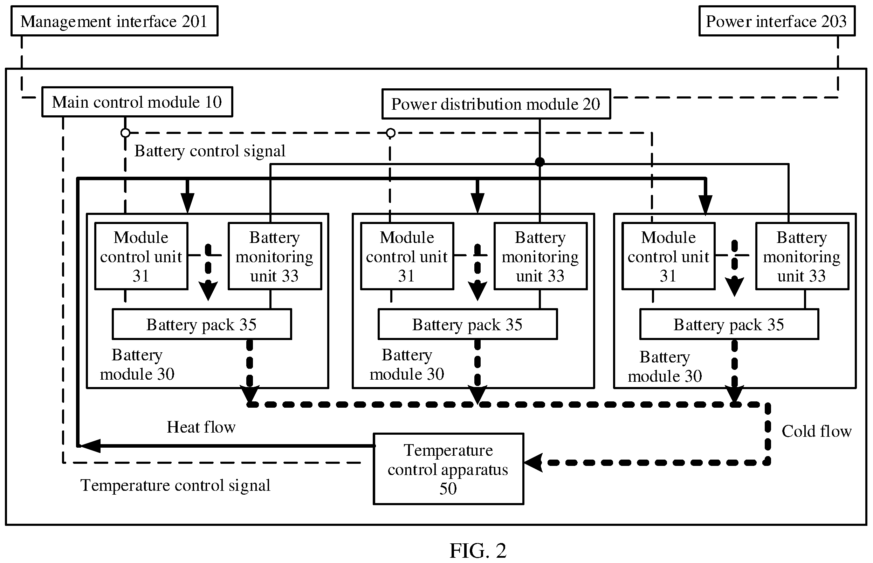

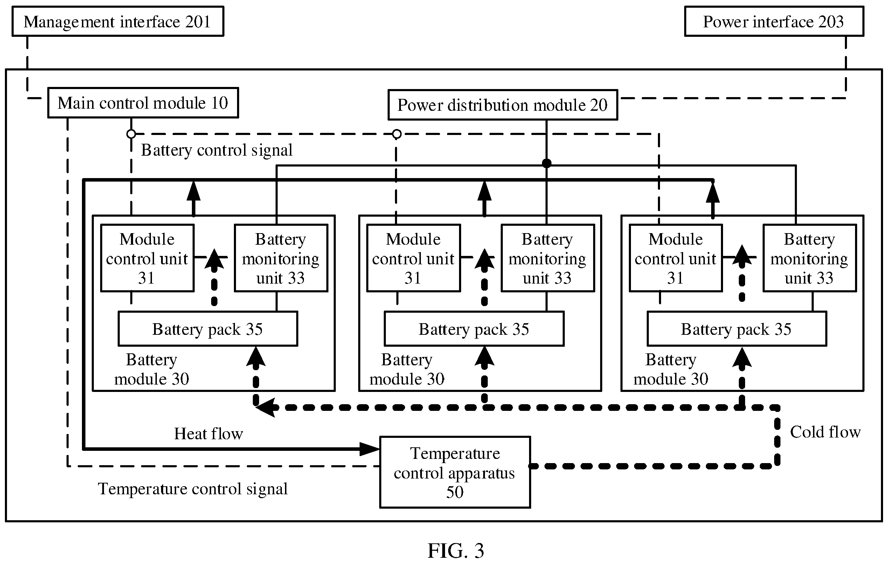

Refer to FIG. 2 and FIG. 3. The energy storage system 100 includes a main control module 10, a power distribution module 20, a battery module 30, and a temperature control apparatus 50. The main control module 10 is configured to send a battery control signal to the battery module 30 to control the battery module 30, and is configured to send a temperature control signal to the temperature control apparatus 50 to keep a temperature of the battery module 30 within a preset target temperature range (for example, an optimal operating temperature range) by using the temperature control apparatus 50. The power distribution module 20 is configured to distribute power to the battery module 30. There are a plurality of battery modules 30 (only three battery modules are shown as an example in FIG. 2 and FIG. 3). The plurality of battery modules 30 are connected in series and/or connected in parallel. The main control module 10 controls communication between the plurality of battery modules 30, to keep a balance between charging and discharging currents of the energy storage system 100, and obtains a status of each battery module 30 and reports the status to the control center 300 (for example, in real time). In this implementation, the main control module 10 is communicatively connected to the control center 300 by using a management interface 201, and the power distribution module 20 is connected to the uninterruptible power supply 500 by using a power interface 203. It may be understood that in another implementation, there may be one or two battery modules 30.

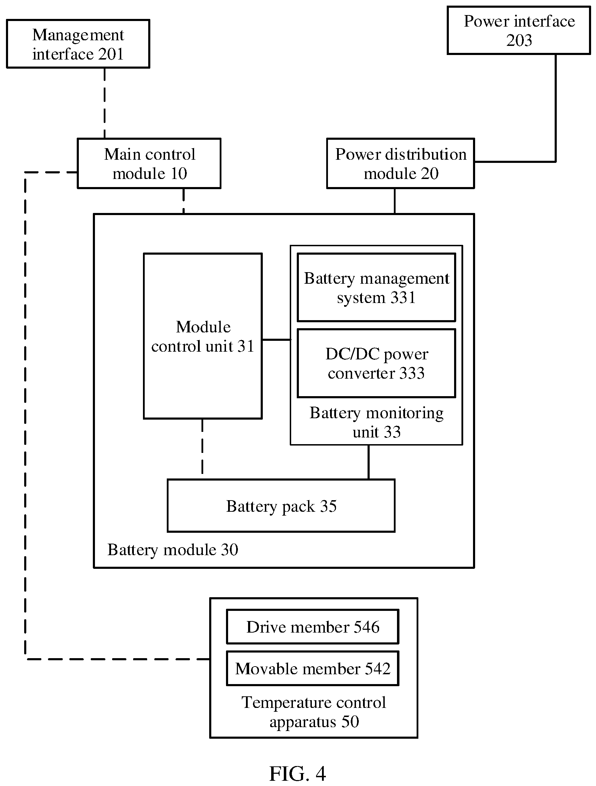

Refer to FIG. 4. Each battery module 30 includes a module control unit 31, a battery monitoring unit 33, and a battery pack 35. The module control unit 31 is configured to control the battery monitoring unit 33 and the battery pack 35. The battery monitoring unit 33 is configured to monitor and adjust an operating status of the battery pack 35 and feed back the operating status to the module control unit 31. The module control unit 31 feeds back the operating status of the battery pack 35 to the main control module 10. The operating status of the battery pack 35 includes a battery temperature, a charging/discharging voltage of the battery pack 35, a current of the battery pack 35, or the like. In this implementation, the battery temperature is a temperature of an electrochemical cell of the battery pack 35. The battery monitoring unit 33 includes a battery management system (battery management system, BMS) 331 and a DC/DC power converter 333. The battery management system 331 is configured to: control the DC/DC power converter 333 and monitor the temperature of the battery pack 35. The DC/DC power converter 333 is configured to perform charging, discharging, standby, or the like of the battery pack 35. It may be understood that, in some implementations, the module control unit 31 may be omitted, and each battery module 30 is directly controlled by using the main control module 10.

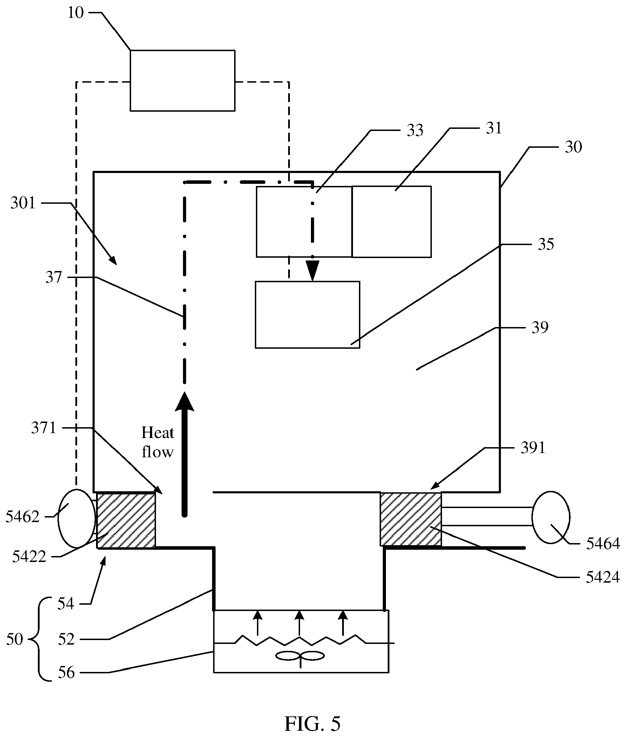

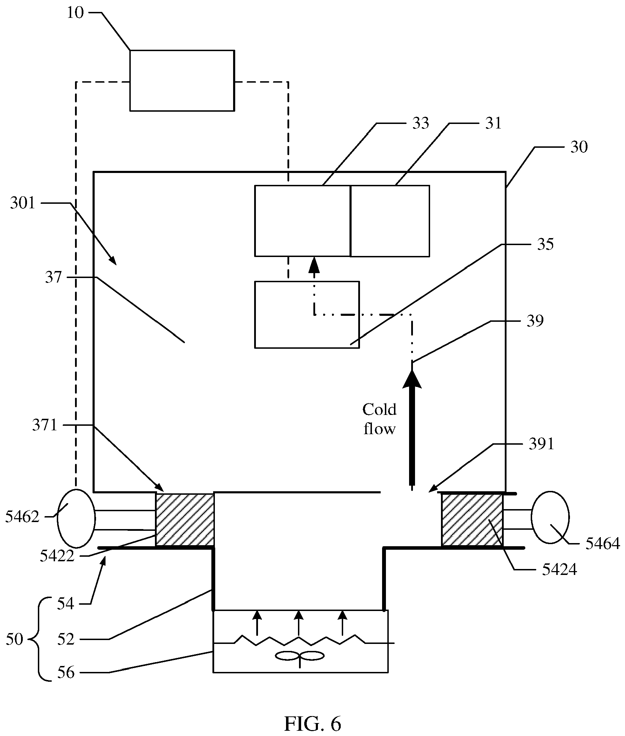

Refer to FIG. 5 and FIG.6. The temperature control apparatus 50 is configured to be controlled by the main control module 10 to choose to transport a heat conduction medium to the battery module 30 along at least one of a first path 37 and a second path 39. The heat conduction medium transported along the first path 37 reaches the battery pack 35 after passing through the battery monitoring unit 33, and the heat conduction medium transported along the second path 39 reaches the battery monitoring unit 33 after passing through the battery pack 35.

The main control module 10 is able to flexibly control the temperature control apparatus 50 to choose to transport the heat conduction medium to the battery module 30 along at least one of the first path 37 and the second path 39, that is, a thermal path is able to be adjusted. For example, a thermal path with relatively low energy consumption may be selected based on an actual application situation, to transport the heat conduction medium to the battery module 30, so that the temperature of the battery pack 35 is kept within the preset target temperature range. Usually, the target temperature range is the optimal operating temperature range of the battery pack 35. Therefore, an energy loss of the energy storage system 100 is reduced, and operating efficiency of the energy storage system 100 is improved. In addition, the DC/DC power converter 333 has relatively high heat power consumption during operating, and the heat conduction medium transported along the first path 37 first reaches the battery monitoring unit 33, so that heat generated by the DC/DC power converter 333 during operating can be reused, thereby reducing an energy loss of the energy storage system 100 for temperature control of the battery pack 35.

In this implementation, the module control unit 31 and the battery monitoring unit 33 are disposed on a same control board. During transportation along the first path 37, the heat conduction medium transported along the first path 37 also flows through the module control unit 31 and the battery monitoring unit 33. It may be understood that the module control unit 31 and the battery monitoring unit 33 may not be disposed on a same control board.

A channel 301, a first channel port 371, and a second channel port 391 are disposed in the battery module 30, and the channel 301 is configured to accommodate the heat conduction medium, so that the heat conduction medium can circulate in the channel 301, to dissipate heat for or heat the battery pack 35. Both a status of the first channel port 371 and a status of the second channel port 391 include a conducted state and a closed state. When the first channel port 371 is conducted, the heat conduction medium from the temperature control apparatus 50 can move in the channel 301 along the first path 37, in other words, the heat conduction medium from the temperature control apparatus 50 enters the channel 301 of the battery module 30 through the first channel port 371, and the heat conduction medium entered from the first channel port 371 reaches the electrochemical cell of the battery pack 35 after passing through the battery monitoring unit 33. When the second channel port 391 is conducted, the heat conduction medium from the temperature control apparatus 50 can move in the channel 301 along the second path 39, in other words, the heat conduction medium that is from the temperature control apparatus 50 and that is entered through the second channel port 391 reaches the battery monitoring unit 33 after passing through the electrochemical cell of the battery pack 35. When the first channel port 371 is closed, the heat conduction medium from the temperature control apparatus 50 cannot enter the battery module 30 through the first channel port 371. When the second channel port 391 is closed, the heat conduction medium from the temperature control apparatus 50 cannot enter the battery module 30 through the second channel port 391. The main control module 10 is further configured to control the temperature control apparatus 50 to switch between the status of the first channel port 371 and the status of the second channel port 391.

Without changing an internal structure or a spatial setting of the battery module 30, the main control module 10 controls the temperature control apparatus 50 to switch the status of the first channel port 371 and the status of the second channel port 391, thereby implementing bidirectional thermal path adjustment and reducing manufacturing costs of the energy storage system 100.

The temperature control apparatus 50 includes a connection cavity 52, a switching unit 54, and a temperature control unit 56. Both the first channel port 371 and the second channel port 391 are connected to the connection cavity 52.

The switching unit 54 is communicatively connected to the main control module 10, and is configured to switch the status of the first channel port 371 and the status of the second channel port 391. The switching unit 54 includes a movable member 542 and a drive member 546 configured to drive the movable member 542 to move. The movable member 542 can be driven by the drive member 546 to move relative to the connection cavity 52. The movable member 542 can conduct or close the first channel port 371, and the movable member 542 can conduct or close the second channel port 391.

The movable member 542 includes a first movable member 5422 and a second movable member 5424, and the drive member 546 includes a first drive member 5462 and a second drive member 5464.

The first movable member 5422 is movably disposed in the connection cavity 52, and is configured to conduct or close the first channel port 371. The second movable member 5424 is movably disposed in the connection cavity 52, and is configured to conduct or close the second channel port 391. Both the first drive member 5462 and the second drive member 5464 are communicatively connected to the main control module 10. The first drive member 5462 is configured to drive the first movable member 5422, and the second drive member 5464 is configured to drive the second movable member 5224 to move. In this implementation, the first channel port 371 is closed when the first movable member 5422 blocks (or obstructs) the first channel port 371; the first channel port 371 is conducted when the first movable member 5422 does not block the first channel 371, and the heat conduction medium can enter the channel 301 (that is, enter the battery module 30) from the first channel port 371; the second channel port 391 is closed when the second movable member 5424 blocks the second channel port 391; and the second channel port 391 is conducted when the second movable member 5424 does not block the second channel port 391, and the heat conduction medium can enter the channel 301 (that is, enter the battery module 30) from the second channel port 391.

In this implementation, the first drive member 5462 is linked to the second drive member 5464. For example, in an initial state, refer to FIG. 5. The first movable member 5422 blocks the first channel port 371, that is, the first movable member 5422 closes the first channel port 371; and the second movable member 5424 does not block the second channel port 391, that is, the second movable member 5424 conducts the second channel port 391. Refer to FIG. 6. The main control module 10 controls both drive shafts of the first drive member 5462 and the second drive member 5464 to move in a first direction (for example, horizontally to the right in FIG. 5), until the first movable member 5422 closes the first channel port 371 and the second movable member 5424 conducts the second channel port 391.

The temperature control unit 56 is communicatively connected to the main control module 10, and is configured to provide the heat conduction medium for the connection cavity 52. In this implementation, the main control module 10 sends a temperature control signal to the temperature control unit 56, to control the temperature control unit 56 to provide the heat conduction medium for the connection cavity 52. The heat conduction medium in the connection cavity 52 flows from the connection cavity 52 to the conducted first channel port 371 or second channel port 391. In this implementation, both the first drive member 5462 and the second drive member 5464 are motors, the temperature control unit 56 is a fan, and the heat conduction medium is air.

The temperature control apparatus 50 includes a heating mode and a heat dissipation mode. The heat conduction medium includes a first heat conduction medium and a second heat conduction medium. When the temperature control apparatus 50 is in the heating mode, the main control module 10 is configured to control the temperature control unit 56 to transport the first heat conduction medium to the battery module 30; or when the temperature control apparatus 50 is in the heat dissipation mode, the main control module 10 is configured to control the temperature control unit 56 to transport the second heat conduction medium to the battery module 30. A temperature of the first heat conduction medium is higher than a temperature of the second heat conduction medium.

Refer to FIG. 5. The first movable member 5422 does not close the first channel port 371, and the second movable member 5424 closes the second channel port 391. The main control module 10 enables the temperature control unit 56 to transport the first heat conduction medium to the connection cavity 52. Because the temperature control apparatus 50 is in the heating mode, the temperature control apparatus 50 transmits the first heat conduction medium (also referred to as a heat flow, for example, a heat flow shown in FIG. 2 or FIG. 5) to the battery module 30 along the first path 37. That is, the first heat conduction medium passes through the module control unit 31 and the battery monitoring unit 33 and absorbs heat generated by the DC/DC power converter 333 during operating, and then flows through the electrochemical cell of the battery pack 35 from the battery monitoring unit 33, to heat the battery pack 35. In the heating mode, a heat flow direction is the first channel port 371 → the battery monitoring unit 33 → the electrochemical cell of the battery pack 35. The heat flow performs heat exchange with the battery pack 35 when passing through the battery pack 35, so that the heat flow at least partially becomes a cold flow (for example, a cold flow shown in FIG. 2).

When the temperature control apparatus 50 is in the heat dissipation mode, refer to FIG. 6. The second movable member 5424 does not block the second channel port 391 and the first movable member 5422 blocks the first channel port 371, that is, the second path 39 is conducted and the first path 37 is closed. The temperature control unit 56 transports the second heat conduction medium (also referred to as a cold flow, for example, a cold flow shown in FIG. 3 or FIG. 6) to the connection cavity 52. When the temperature control apparatus 50 is in the heat dissipation mode, the second heat conduction medium is transported along the second path 39, and the second heat conduction medium first passes through the battery pack 35 (the cold flow first passes through the battery pack 35). Therefore, the second heat conduction medium first reaches the battery pack 35 for cooling and heat dissipation. This improves heat dissipation efficiency. The cold flow performs cold exchange with the battery pack 35 when passing through the battery pack 35, so that the cold flow at least partially becomes a heat flow (for example, a heat flow shown in FIG. 3).

The main control module 10 is configured to: control the temperature control apparatus 50 based on the battery temperature collected by the battery monitoring unit 33; and when the battery temperature is less than a first threshold of the preset target temperature range, control the temperature control apparatus 50 to start the heating mode; or when the battery temperature is greater than the second threshold of the preset target operating range, control the temperature control apparatus 50 to start the heat dissipation mode. The battery monitoring unit 33 monitors the battery temperature, so that the temperature control apparatus 50 automatically switches between the heating mode and the heat dissipation mode. This makes the energy storage system 100 more intelligent. The preset target temperature range is [first threshold, second threshold], and the second threshold is greater than the first threshold. In this implementation, the battery pack 35 is a lithium battery, and an optimal operating temperature range of the lithium battery is [0, 40] degrees Celsius. Therefore, the first threshold is set to 0 degrees Celsius, and the second threshold is set to 40 degrees Celsius. It may be understood that in this application, the battery pack 35 is not limited to a lithium battery, and may be alternatively another battery, such as a lead-acid battery. In this application, the target temperature range is not limited. In another implementation, the target temperature range may be set based on a requirement.

The main control module 10 and the module control unit 31 each may include a processor and a memory. The processor may be a processor, or may be a general term of a plurality of processing elements. For example, the processor may be a general central processing unit (central processing unit, CPU), or may be an application-specific integrated circuit (application-specific integrated circuit, ASIC), or one or more integrated circuits configured to control execution for a program of a solution of this application, for example, one or more micro-processors (such as digital signal processor, DSP) or one or more field programmable gate arrays (field programmable gate array, FPGA). In a specific implementation, in an embodiment, the processor may include one or more CPUs.

The memory may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, or an optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. The memory may exist independently or may be integrated with the processor, and may be configured to store data of various types of collected information and corresponding waveforms.

It may be understood that, in this application, there is no limitation that the second channel port 391 is closed when the first channel port 371 is conducted. In another implementation, the first channel ports 371 and the second channel port 391 may be both conducted.

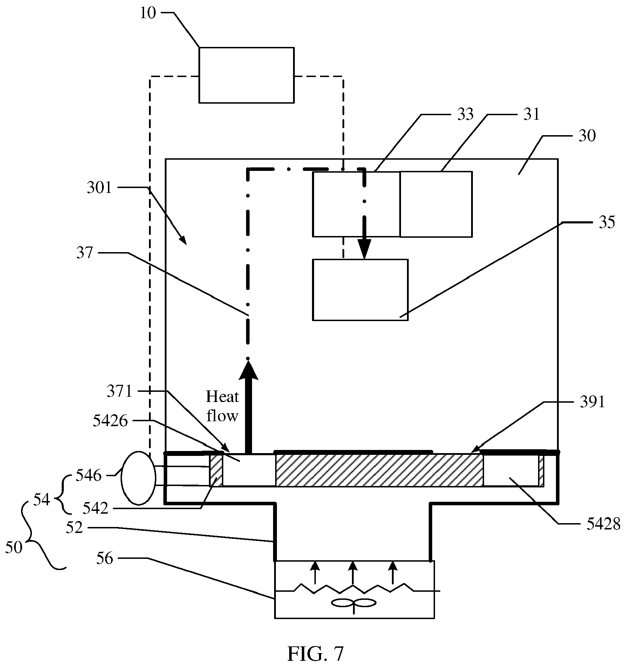

It may be understood that in this application, the first drive member 5462 and the second drive member 5464 are not limited to motors, and the first drive member 5462 and the second drive member 5464 may be alternatively other types of drive members. For example, in another implementation, the first drive member 5462 and the second drive member 5464 may be hydraulic machines. A quantity of drive members 546 and a quantity of movable members 542 are not limited. For example, in another implementation, there may be one drive member 546 and one movable member 542. As shown in FIG. 7, a first through hole 5426 and a second through hole 5428 are disposed on the movable member 542 at an interval. When the temperature control apparatus 50 is in the heating mode, the first through hole 5426 corresponds to a position of the first channel port 371, the first channel port 371 is connected to the connection cavity 52, the second through hole 5428 does not correspond to a position of the second channel port 391, the movable member 542 closes the second channel port 391 and the second path 39, the second channel port 391 is not connected to the connection cavity 52, and the heat conduction medium in the connection cavity 52 enters the channel 301 from the first channel port 371 and moves along the first path 37. When the temperature control apparatus 50 is in the heat dissipation mode, the first through hole 5426 does not correspond to the position of the first channel port 371, the movable member 542 closes the first channel port 371, the first channel port 371 is not connected to the connection cavity 52, the second through hole 5428 corresponds to the position of the second channel port 391, the second channel port 391 is connected to the connection cavity 52, and the heat conduction medium in the connection cavity 52 enters the channel 301 from the second channel port 391 and moves along the second path 39.

It may be understood that, in some implementations, the drive member 546 may be omitted from the switching unit 54, both the first movable member 5422 and the second movable member 5424 are valves, the first movable member 5422 is disposed on the first channel port 371, and the second movable member 5424 is disposed on the second channel port 391. In some implementations, the drive member 546 may drive the movable member 542 to rotate, to reduce lateral moving space of the movable member 542.

It may be understood that in this application, the temperature control unit 56 is not limited to a fan, and the heat conduction medium is not limited to an air fluid. In another implementation, the heat conduction medium may be a liquid. For example, the heat conduction medium may be a liquid oil. The temperature control unit 56 includes a heating module and a refrigerating module. The heating module heats the liquid oil when the temperature control unit 56 is in the heating mode, the refrigerating module cools the liquid oil when the temperature control unit 56 is in the heat dissipation mode, and the channel 301 may be a cavity channel that does not affect components in the battery module 30.

The following briefly describes an operating process of the energy storage system 100 for temperature control of the battery pack 35.

The control center 300 sends an operating instruction to the energy storage system 100. The operating instruction includes charging, discharging, charging and discharging, and standby. The energy storage system 100 starts to operate, the target operating range is preset by the main control module 10, and the battery monitoring unit 33 collects an operating status of the battery module 30 and feeds back the operating status to the main control module 10 by using the module control unit 31. The operating status of the battery module 30 includes the battery temperature. The battery monitoring unit 33 may collect the operating status of the battery module 30 in real time, periodically, or aperiodically.

The main control module 10 compares the collected battery temperature with the preset operating temperature range, to determine whether the battery temperature meets the preset target temperature range. When the battery temperature falls outside the target temperature range, that is, it is determined that the battery temperature does not meet the preset target temperature range, two cases are included. In a case 1, the battery temperature is less than the first threshold. In a case 2, the battery temperature is greater than the second threshold. If the battery temperature is less than the first threshold, the main control module 10 controls the temperature control apparatus 50 to start the heating mode. The main control module 10 controls the first drive member 5462 to drive the first movable member 5422 to open the first channel port 371, and controls the second drive member 5464 to drive the second movable member 5424 to close the second channel port 391. The temperature control unit 56 provides the first heat conduction medium for the connection cavity 52. The first heat conduction medium flows into the battery module 30 along the first path 37, to heat the battery pack 35. If the battery temperature is greater than the second threshold, the main control module 10 controls the temperature control apparatus 50 to start the heat dissipation mode. The main control module 10 controls the first drive member 5462 to drive the first movable member 5422 to close the first channel port 371, and controls the second drive member 5464 to drive the second movable member 5424 to open the second channel port 391. The temperature control unit 56 provides the second heat conduction medium for the connection cavity 52. The second heat conduction medium flows into the battery module 30 along the second path 39, to dissipate heat for the battery pack 35.

When the temperature control apparatus 50 is in the heating mode or the heat dissipation mode, the battery monitoring unit 33 may persistently collect the operating status of the battery module 30 and feed back the operating status to the main control module 10 by using the module control unit 31, to monitor the operating status of the battery module 30 in real time.

In a conventional energy storage system, usually, a heat conduction medium is transported to a battery module along a unidirectional path. During heating, it is a waste that power consumption heat generated by a DC/DC power converter first passes through a battery monitoring unit. During heat dissipation, power consumption generated by the DC/DC power converter with relatively high power consumption consumes specific cold energy.

One battery module 30 is used as an example. In the heating mode, that is, the first path 37 is conducted and the second path 39 is closed, Q1 + ΔQ = Q heat. Q1 is heat output by the temperature control unit 56, ΔQ is power consumption heat of the DC/DC power converter 333, and Q heat is total heat input to the battery pack 35. In the heat dissipation mode, that is, the first channel port 371 is closed and the second path 391 is open, Q2 - ΔQ = Q cold. Q2 is cold energy output by the temperature control unit 56, ΔQ is power consumption heat of the DC/DC power converter 333, and Q cold is cold energy input to the battery pack 35.

Clearly, in the energy storage system 100 provided in this application, because the bidirectional adjustable first path 37 and second path 39 for heating or dissipating heat for the battery pack 35 are disposed, for example, in the heating mode, Q1 is heat of the first heat conduction medium output by the temperature control unit 56 along the first path 37 plus the power consumption heat ΔQ of the DC/DC power converter 333, and therefore heat obtained by the battery pack 35 is maximum Q heat; or in the heat dissipation mode, the second heat conduction medium is directly transported by the temperature control unit 56 to the battery pack 35 along the second path 39 without passing through the battery monitoring unit 33, and therefore cold energy that can be obtained by the battery pack 35 is maximum Q cold.

It may be understood that, when the temperature control apparatus 50 is in the heating mode, if the battery temperature collected by the battery monitoring unit 33 falls within the preset operating temperature range, the temperature control apparatus 50 may exit the heating mode; or when the temperature control apparatus 50 is in the heat dissipation mode, if the battery temperature collected by the battery monitoring unit 33 falls within the preset operating temperature range, the temperature control apparatus 50 may exit the heat dissipation mode.

It may be understood that the temperature control unit 56 may be omitted from the temperature control apparatus 50.

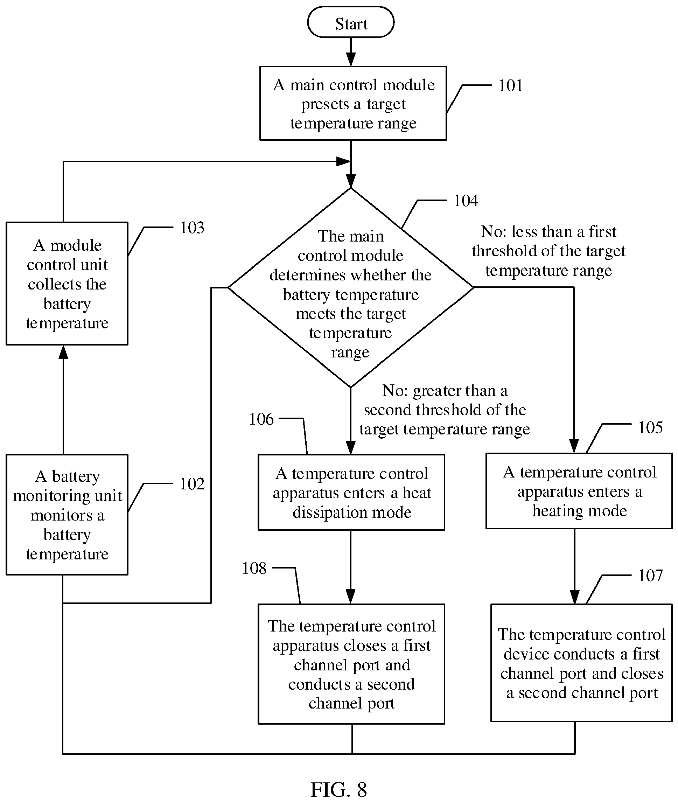

Refer to FIG. 8. This application provides a temperature control method of the foregoing energy storage system, including the following steps:
Step 101: A main control module 10 presets a target temperature range.
Step 102: A battery monitoring unit 33 monitors a battery temperature of a battery pack 35.
Step 103: A module control unit 31 collects the battery temperature and feeds back the battery temperature to the main control module 10.
Step 104: The main control module 10 determines, based on the battery temperature, whether the battery temperature falls within the preset target temperature range; and if the battery temperature is less than a first threshold of the target temperature range, performs step 105; or if the battery temperature is greater than a second threshold of the target temperature range, performs step 106; or if the battery temperature falls within the preset target temperature range, returns to step 102.
Step 105: The main control module 10 controls a temperature control apparatus 50 to enter a heating mode.
Step 106: The main control module 10 controls the temperature control apparatus 50 to enter a heat dissipation mode.
Step 107: After controlling the temperature control apparatus 50 to enter the heating mode, the main control module 10 controls the temperature control apparatus 50 to conduct a first channel port 371 and close a second channel port 391, so that the temperature control apparatus 50 transports a heat conduction medium along a first path 37.
Step 108: After controlling the temperature control apparatus 50 to enter the heat dissipation mode, the main control module 10 controls the temperature control apparatus 50 to close the first channel port 371 and conduct the second channel port 391, so that the temperature control apparatus 50 transports the heat conduction medium along a second path 39.

An order of the steps is not limited in this application. In some implementations, some steps may be performed in no order. For example, step 103 may also be performed when step 102 is performed.

It may be understood that, in some implementations, the temperature control method of the foregoing energy storage system includes: controlling the temperature control apparatus to choose to transport the heat conduction medium to a battery module along at least one of the first path and the second path, where the heat conduction medium transported along the first path reaches the battery pack after passing through the battery monitoring unit, and the heat conduction medium transported along the second path reaches the battery monitoring unit after passing through the battery pack.

Before the controlling the temperature control apparatus to choose to transport the heat conduction medium to a battery module along at least one of the first path and the second path, the temperature control method further includes a step that the battery monitoring unit monitors the battery temperature of the battery pack; the controlling a temperature control apparatus to enter a heating mode includes: when the battery temperature is less than the first threshold of the preset target temperature range, controlling the temperature control apparatus to enter the heating mode; and the controlling the temperature control apparatus to enter a heat dissipation mode includes: when the battery temperature is greater than the second threshold of the preset target temperature range, controlling the temperature control apparatus to enter the heat dissipation mode.

When the temperature control apparatus is in the heating mode, the temperature control apparatus transports a first heat conduction medium to the battery module; or when the temperature control apparatus is in the heat dissipation mode, the temperature control apparatus transports a second heat conduction medium to the battery module. A temperature of the first heat conduction medium is higher than a temperature of the second heat conduction medium.

A channel, a first channel port, and a second channel port are disposed in the battery module, and the channel is configured to accommodate the heat conduction medium; both a status of the first channel port and a status of the second channel port include a conducted state and a closed state; the heat conduction medium is able to move in the channel along the first path when the first channel port is conducted; the heat conduction medium can move in the channel along the second path when the second channel port is conducted; and the controlling the temperature control apparatus to choose to transport the heat conduction medium to a battery module along at least one of the first path and the second path includes: controlling the temperature control apparatus to switch the statuses of the first channel port and the second channel port.

The temperature control apparatus includes a connection cavity and a switching unit, the connection cavity is connected to the first channel port and the second channel port, and the controlling the temperature control apparatus to switch the statuses of the first channel port and the second channel port includes: controlling the switching unit to switch the statuses of the first channel port and the second channel port, so that the heat conduction medium in the connection cavity enters the channel through the first channel port and/or the second channel port.

The switching unit includes a drive member and a movable member driven by the drive member, the movable member is accommodated in the connection cavity, and the controlling the switching unit to switch the statuses of the first channel port and the second channel port includes: controlling the drive member to drive the movable member to move in the connection cavity. The first channel port is closed when the movable member blocks the first channel port, the first channel port is conducted when the movable member does not block the first channel port, the second channel port is closed when the movable member blocks the second channel port, and the second channel port is conducted when the movable member does not block the second channel port.

The drive member includes a first drive member and a second drive member, the movable member includes a first movable member and a second movable member, the first movable member is movably disposed in the connection cavity and is connected to the first drive member, and the second movable member is movably disposed in the connection cavity and is connected to the second drive member; and the controlling the drive member to drive the movable member to move in the connection cavity includes: when controlling the first drive member to drive the first movable member to conduct the first channel port, controlling the second drive member to drive the second movable member to close the second channel port; or when controlling the first drive member to drive the first movable member to close the first channel port, controlling the second drive member to drive the second movable member to conduct the second channel port.

The foregoing description is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage system, comprising a main control module, a battery module, and a temperature control apparatus, wherein the battery module comprises a battery monitoring unit and a battery pack, and the battery monitoring unit comprises a battery management system and a DC/DC power converter; and
the main control module is configured to control the temperature control apparatus to choose to transport a heat conduction medium to the battery module along at least one of a first path and a second path, wherein the heat conduction medium transported along the first path reaches the battery pack after passing through the battery monitoring unit, and the heat conduction medium along the second path reaches the battery monitoring unit after passing through the battery pack.

2. The energy storage system according to claim 1, wherein the temperature control apparatus comprises a heating mode and a heat dissipation mode; and when the temperature control apparatus is in the heating mode, the main control module is configured to control the temperature control apparatus to transport the heat conduction medium to the battery module along the first path; or
when the temperature control apparatus is in the heat dissipation mode, the main control module is configured to control the temperature control apparatus to transport the heat conduction medium to the battery module along the second path.

3. The energy storage system according to claim 2, wherein the battery management system is further configured to monitor a battery temperature of the battery pack and feed back the battery temperature to the main control module;
the main control module is configured to: when the battery temperature is less than a first threshold of a preset target temperature range, control the temperature control apparatus to enter the heating mode; and
the main control module is further configured to: when the battery temperature is greater than a second threshold of the preset target temperature range, control the temperature control apparatus to enter the heat dissipation mode.

4. The energy storage system according to claim 2 or 3, wherein the heat conduction medium comprises a first heat conduction medium and a second heat conduction medium; and
when the temperature control apparatus is in the heating mode, the main control module is configured to control the temperature control apparatus to transport the first heat conduction medium to the battery module; or
when the temperature control apparatus is in the heat dissipation mode, the main control module is configured to control the temperature control apparatus to transport the second heat conduction medium to the battery module, wherein a temperature of the first heat conduction medium is higher than a temperature of the second heat conduction medium.

5. The energy storage system according to any one of claims 1 to 4, wherein a channel, a first channel port, and a second channel port are disposed in the battery module, and the channel is configured to accommodate the heat conduction medium;
both a status of the first channel port and a status of the second channel port comprise a conducted state and a closed state;
the heat conduction medium is able to move in the channel along the first path when the first channel port is conducted;
the heat conduction medium can move in the channel along the second path when the second channel port is conducted; and
the main control module is further configured to control the temperature control apparatus to switch the status of the first channel port and the status of the second channel port.

6. The energy storage system according to claim 5, wherein
the temperature control apparatus comprises a connection cavity and a switching unit, the connection cavity is connected to the first channel port and the second channel port, and the switching unit is communicatively connected to the main control module, and is configured to switch the status of the first channel port and the status of the second channel port.

7. The energy storage system according to claim 6, wherein the switching unit comprises a drive member and a movable member driven by the drive member, the drive member is communicatively connected to the main control module, the movable member is accommodated in the connection cavity, and the movable member is driven by the drive member to move in the connection cavity; and
the first channel port is closed when the movable member blocks the first channel port, the first channel port is conducted when the movable member does not block the first channel port, the second channel port is closed when the movable member blocks the second channel port, and the second channel port is conducted when the movable member does not block the second channel port.

8. The energy storage system according to claim 7, wherein the drive member comprises a first drive member and a second drive member, and the movable member comprises a first movable member and a second movable member;
the first movable member is movably disposed in the connection cavity and is connected to the first drive member, and is configured to be driven by the first drive member to conduct or close the first channel port; and
the second movable member is movably disposed in the connection cavity and is connected to the second drive member, and is configured to be driven by the second drive member to conduct or close the second channel port.

9. A temperature control method of an energy storage system, comprising: controlling a temperature control apparatus to choose to transport a heat conduction medium to a battery module along at least one of a first path and a second path, wherein the heat conduction medium transported along the first path reaches a battery pack after passing through a battery monitoring unit, the heat conduction medium transported along the second path reaches the battery monitoring unit after passing through the battery pack, and the battery monitoring unit comprises a battery management system and a DC/DC power converter.

10. The temperature control method according to claim 9, wherein the controlling a temperature control apparatus to choose to transport a heat conduction medium to a battery module along at least one of a first path and a second path comprises:
controlling the temperature control apparatus to enter a heating mode, and controlling the temperature control apparatus to transport the heat conduction medium to the battery module along the first path; or
controlling the temperature control apparatus to enter a heat dissipation mode, and controlling the temperature control apparatus to transport the heat conduction medium along the second path.

11. The temperature control method according to claim 10, wherein before the controlling a temperature control apparatus to choose to transport a heat conduction medium to a battery module along at least one of a first path and a second path, the temperature control method further comprises a step that the battery monitoring unit monitors a battery temperature of the battery pack;
the controlling the temperature control apparatus to enter a heating mode comprises: when the battery temperature is less than a first threshold of a preset target temperature range, controlling the temperature control apparatus to enter the heating mode; and
the controlling the temperature control apparatus to enter a heat dissipation mode comprises: when the battery temperature is greater than a second threshold of the preset target temperature range, controlling the temperature control apparatus to enter the heat dissipation mode.

12. The temperature control method according to claim 10 or 11, wherein when the temperature control apparatus is in the heating mode, the temperature control apparatus transports a first heat conduction medium to the battery module; or when the temperature control apparatus is in the heat dissipation mode, the temperature control apparatus transports a second heat conduction medium to the battery module, wherein a temperature of the first heat conduction medium is higher than a temperature of the second heat conduction medium.

13. The temperature control method according to any one of claims 9 to 12, wherein a channel, a first channel port, and a second channel port are disposed in the battery module, and the channel is configured to accommodate the heat conduction medium;
both a status of the first channel port and a status of the second channel port comprise a conducted state and a closed state;
the heat conduction medium is able to move in the channel along the first path when the first channel port is conducted;
the heat conduction medium can move in the channel along the second path when the second channel port is conducted; and
the controlling a temperature control apparatus to choose to transport a heat conduction medium to a battery module along at least one of a first path and a second path comprises: controlling the temperature control apparatus to switch the statuses of the first channel port and the second channel port.

14. The temperature control method according to claim 13, wherein the temperature control apparatus comprises a connection cavity and a switching unit, and the connection cavity is connected to the first channel port and the second channel port; and
the controlling the temperature control apparatus to switch the statuses of the first channel port and the second channel port comprises: controlling the switching unit to switch the statuses of the first channel port and the second channel port, so that the heat conduction medium in the connection cavity enters the channel through the first channel port and/or the second channel port.

15. The temperature control method according to claim 14, wherein the switching unit comprises a drive member and a movable member driven by the drive member, and the movable member is accommodated in the connection cavity; and
the controlling the switching unit to switch the statuses of the first channel port and the second channel port comprises: controlling the drive member to drive the movable member to move in the connection cavity, wherein the first channel port is closed when the movable member blocks the first channel port, the first channel port is conducted when the movable member does not block the first channel port, the second channel port is closed when the movable member blocks the second channel port, and the second channel port is conducted when the movable member does not block the second channel port.
